# EUROPÄISCHE PATENTANMELDUNG

(11) **EP 2 023 586 A1**
(43) Veröffentlichungstag der Anmeldung: **11.02.2009**
(21) Anmeldenummer: 07015549.4
(22) Anmeldetag: 07.08.2007
(51) Int. Cl.: H04M 3/42

(54) **Zugriff auf Anruflisten von gerufenen Teilnehmern**

(71) Anmelder: Avaya GmbH & Co. KG, 60326 Frankfurt am Main (DE)
(72) Erfinder: Friebel, Marc, 63768 Hösbach (DE)
(74) Vertreter: Tergau & Pohl Patentanwälte

(57) **Zusammenfassung**

Mit einem Verfahren zum Betreiben einer Telefonanlage (1) mit mindestens einem Telefonie-Endgerät, (2, 4, 6) zu dem und/oder von dem zusätzlich zu Sprach- oder Nutzdaten Funktionsdaten übertragen werden, anhand derer Sonderfunktionen der Telefonanlage (1) ausgeführt werden soll selbst bei vergleichsweise komplexer Anlagen- und Anruferstruktur eine besonders günstig handhabbare Verwaltung der eingehenden Anruferinformationen ermöglicht sein. Dazu wird erfindungsgemäß als eine Sonderfunktion einem Anrufer die Option bereitgestellt seine in einer Rufnummernliste des Telefonie-Endgerätes (2, 4, 6) hinterlegte Rufnummer zu bearbeiten.

## Beschreibung

Die Erfindung bezieht sich auf ein Verfahren zum Betreiben einer Telefonanlage mit mindestens einem Telefonie-Endgerät, zu dem und/oder von dem zusätzlich zu Sprach- oder Nutzdaten Funktionsdaten übertragen werden, anhand derer Sonderfunktionen der Telefonanlage ausgeführt werden. Sie betrifft weiter einer Telefonanlage, insbesondere zur Durchführung des Verfahrens mit mindestens einem Telefonie-Endgerät, zu dem und/oder von dem zusätzlich zu Sprach- oder Nutzdaten Funktionsdaten übertragbar sind, anhand derer Sonderfunktionen der Telefonanlage ausgeführt werden.

In modernen Telefonanlagen oder -systemen sind üblicherweise eine Vielzahl von Telefonie-Endgeräten mit einer zentralen Vermittlungseinheit verbunden, über die Telekommunikationsverbindungen zwischen einzelnen Telefonie-Endgeräten oder auch von von außerhalb des internen Telefonnetzwerks eingehenden Anrufen mit ausgewählten Telefonie-Endgeräten hergestellt werden. Im Rahmen dieser Telekommunikationsverbindungen werden Sprach- oder Nutzdaten zu dem jeweils ausgewählten Telefonie-Endgerät hin und/oder von diesem an die zentrale Vermittlungseinrichtung und von dieser an das jeweilige Endgerät übertragen. Die Datenübertragung kann dabei auf herkömmliche Weise oder auch unter Nutzung des Internet-Protokolls vorgenommen werden.

Üblicherweise werden in derartigen Telefonanlagen oder-systemen zusätzlich zu den Sprach- oder Nutzdaten zu den und/oder von den jeweiligen Telefonie-Endgeräten auch noch weitere Daten, nämlich so genannte Funktions- oder Steuerdaten, übertragen, die nicht unmittelbar Teil der innerhalb der Kommunikationsverbindung ausgetauschten Informationen sind, sondern die die Grundlage für die Ausführung von so genannten Sonderfunktionen der Telefonanlage bilden. Bei derartigen Sonderfunktionen kann es sich beispielsweise um Einrichtungs- oder Steuerdaten für die Aktivierung oder Deaktivierung von Rufumleitungen, von Anrufbeantworterfunktionen, von Gebührenerfassungs- oder Verwaltungsinformationen oder dergleichen handeln. Hilfsweise kann im Rahmen derartiger Sonderfunktionen auch die Ruf- oder Nebenstellennummer eines anrufenden Teilnehmers an das jeweils angerufene Telefonie-Endgerät übertragen und dort zur Anzeige gebracht werden, so dass der Nutzer des angerufenen Telefonie-Endgeräts bereits beim Eingehen des Anrufs Informationen über den Anrufer erhalten kann. Im Falle der Abwesenheit des angerufenen Teilnehmers können im Rahmen weiterer Sonderfunktionen Rufnummern der anrufenden Teilnehmer auch in einer Rufnummern- oder Anruferliste des angerufenen Telefonie-Endgeräts gespeichert oder hinterlegt werden, so dass der angerufene Teilnehmer nach seiner Rückkehr an den Arbeitsplatz eine Information über die zwischenzeitlich eingegangenen, von ihm nicht angenommenen Anrufe erhält.

Gerade bei vergleichsweise komplexen Telefonanlagen oder -systemen, wie beispielsweise in Call-Centern oder dergleichen, oder bei Telefonanlagen in Unternehmen oder Organisationseinheiten, bei denen das angerufene Telefonie-Endgerät nicht notwendigerweise aufgrund der Person des jeweiligen Nutzers, sondern aufgrund von dessen sachlicher Qualifikation oder Zuständigkeit ausgewählt wird, kann ein derartiges System der durchgängigen Ablage von Anruferinformationen im jeweils angerufenen Telefonie-Endgerät jedoch zur Ablage vergleichsweise großer Datenmengen führen, die ein späteres Aufarbeiten der Informationen oder auch ein gezieltes bedarfsgerechtes Rückrufmanagement erschweren oder gänzlich unmöglich machen.

Der Erfindung liegt daher die Aufgabe zugrunde, ein Verfahren für eine Telefonanlage der oben genannten Art anzugeben, mit dem selbst bei vergleichsweise komplexer Anlagen- und Anruferstruktur eine besonders günstig handhabbare Verwaltung der eingehenden Anruferinformationen ermöglicht ist. Des Weiteren soll eine zur Durchführung des Verfahrens besonders geeignete Telefonanlage angegeben werden.

Bezüglich des Verfahrens wird diese Aufgabe erfindungsgemäß gelöst, indem als eine Sonderfunktion einem Anrufer die Option bereitgestellt wird, seine in einer Rufnummernliste des Telefonie-Endgeräts hinterlegte Rufnummer zu bearbeiten.

Die Erfindung geht dabei von der Überlegung aus, dass gerade bei vergleichsweise komplexen Telefonanlagen oder auch möglichen Anruferstrukturen eine Vereinfachung und damit auch erleichterte Handhabung der in einzelnen Telefonie-Endgeräten in Rufnummernlisten hinterlegten Informationen ermöglicht ist, indem diese Informationen besonders bedarfsgerecht ausgewählt und verwaltet werden sollten. Dazu sollte insbesondere die Möglichkeit bereitgestellt werden, auch nach der Hinterlegung von Anruferinformationen in den Rufnummernlisten des angerufenen Telefonie-Endgeräts auf diese zugreifen zu können, um sie gegebenenfalls mit weiteren, das nachfolgende Informationsmanagement erleichternden Zusatzinformationen zu versehen oder zu ergänzen. Dabei sollte insbesondere dem Umstand Rechnung getragen werden, dass gerade die durch die Hinterlegung in Rufnummernlisten im angerufenen Telefonie-Endgerät ausgelösten oder angestrebten Reaktionen insbesondere in einem Rückrufwunsch oder Rückruf bestehen. Gerade aus Sicht des Anrufers, dessen Rufnummer in einer derartigen Rufnummernliste hinterlegt wird, kann dieser Rückrufwunsch jedoch sofort oder auch zu einem späteren Zeitpunkt entfallen oder modifiziert werden. Eine besonders bedarfsgerechte Verwaltung der in den Rufnummerlisten hinterlegten Informationen ist somit ermöglicht, indem dem Anrufer Gelegenheit gegeben wird, diesbezügliche Zusatzinformationen geeignet zu hinterlegen. Dazu sollte als Sonderfunktion eine Option vorgesehen sein, die dem Anrufer einen Zugriff auf Umfang und Art der für ihn hinterlegten Rufnummer in der Rufnummernliste zu ermöglicht.

Vorteilhafterweise ist als Rufnummernliste dabei die Anruferliste des Telefonie-Endgeräts vorgesehen. In einer derartigen Ausgestaltung wird als Sonderfunktion somit dem Anrufer die Option eingeräumt, nachträglich auf den ihn betreffenden Eintrag in der Anruferliste des angerufenen Telefonie-Endgeräts zuzugreifen.

In einer besonders vorteilhaften Ausgestaltung dieser Sonderfunktion, also der Option zum nachträglichen Zugriff auf die für den Anrufer hinterlegte Information in der Anrufer- oder Rufnummernliste des angerufenen Telefonie-Endgeräts, wird dem Umstand Rechnung getragen, dass ein derartiger Eintrag in der Rufnummern- oder Anruferliste des angerufenen Telefonie-Endgeräts üblicherweise vom Nutzer dieses Endgeräts mit einem Rückrufwunsch des Anrufers assoziiert wird. Die Zugriffsmöglichkeit des Anrufers auf den für ihn in der Rufnummernliste des angerufenen Telefonie-Endgeräts hinterlegten Eintrag ist daher in besonders vorteilhafter Ausgestaltung darauf ausgerichtet, zusätzliche Informationen hinsichtlich eines möglicherweise gewünschten Rückrufs zu hinterlegen. In vorteilhafter Ausgestaltung kann dabei vorgesehen sein, dass dem Anrufer die Option bereitgestellt wird, den in der Anruferliste hinterlegten Rufnummerneintrag um eine Statusinformation zu ergänzen, ob oder ob nicht ein Rückruf erwünscht ist. In weiterer oder alternativer vorteilhafter Ausgestaltung wird der hinterlegte Rufnummemeintrag ferner ergänzt, um ausführlichere, vorzugsweise editierbare Informationen, beispielsweise ab wann oder bis zu welchem spätestmöglichem Zeitpunkt ein Rückruf gewünscht wird.

In besonders vorteilhafter Ausgestaltung gerade im Hinblick auf möglicherweise vergleichsweise komplexe Telefonanlagen oder -systeme ist aber vorgesehen, die im Telefonie-Endgerät in Form von Rufnummern- oder Anruferlisten hinterlegten Informationen konsequent zu verschlanken und zu minimieren. Zu diesem Zweck wird dem Anrufer vorteilhafterweise die Option bereitgestellt, seine in der Rufnummernliste des Telefonie-Endgeräts hinterlegte Rufnummer aus der Rufnummernliste wieder zu löschen. Damit ist sichergestellt, dass zumindest die erkennbar nicht mehr erforderlichen Rückrufe und dergleichen sofort wieder aus dem entsprechenden Speicherbereich des Telefonie-Endgeräts entfernt werden, so dass die vom Nutzer des Telefonie-Endgeräts insgesamt wahrzunehmende und gegebenenfalls zu überprüfende Datenmenge besonders gering gehalten wird.

Vorteilhafterweise wird dem Anrufer die Option zur Bearbeitung seines Eintrags in der Rufnummernlisten bereitgestellt, nachdem eine gewünschte Rufverbindung mit dem Telefonie-Endgerät nicht zustande kam. Dabei ist insbesondere dem Umstand Rechnung getragen, dass der Eintrag in der Rufnummern- oder Anruferliste möglicherweise überhaupt erst für den Fall erstellt wird, dass die gewünschte Rufverbindung nicht zustande kam.

Die Überarbeitung der Rufnummer aus der Rufnummernliste könnte von einer zentralen Vermittlungseinheit der Telefonanlage oder von einer sonstigen geeigneten Stelle aus veranlasst und eingeleitet werden, wobei insbesondere dem Anrufer in der Art eines Eingabe- oder Abfragemenüs durch gezielte Rückfragen die Option angeboten wird, nach dem Anrufversuch den entsprechenden Eintrag in der Rufnummernliste des angerufenen Telefonie-Endgeräts zu bearbeiten. In besonders vorteilhafter Ausgestaltung wird die Bearbeitung der Rufnummer aus der Rufnummernliste aber vom Telefonie-Endgerät des Anrufers aus veranlasst. Bei einer derartigen Ausgestaltung hat somit der Anrufer jederzeit nach dem fehlgeschlagenen Anrufversuch, also sowohl unmittelbar nach dem Anruf als auch zu einem späteren Zeitpunkt, die Möglichkeit, seinen entsprechenden Eintrag in der Rufnummernliste geeignet zu bearbeiten. Damit kann insbesondere der Möglichkeit Rechnung getragen werden, dass zunächst ein Rückrufwunsch seitens des Anrufers besteht, der jedoch nachträglich wegfällt, beispielsweise indem seine Anfrage zwischenzeitlich von einer anderen Stelle bearbeitet wurde.

Eine besonders zuverlässige und vielfältige Übertragung von Funktionsdaten in Kombination mit Sprach- oder Nutzdaten ist erreichbar, indem die genannten Daten vorteilhafterweise unter Nutzung des Internet-Protokolls übertragen werden. Dabei werden die Sprachsignale vorteilhafterweise komprimiert und digitalisiert und in Form von Sprachpaketen unter Nutzung eines Internet-Protokolls zum Gesprächspartner übertragen. Als Internet-Protokoll zur Sprachübertragung ist der SIP (Session Initiation Protocol) Standard denkbar, vorzugsweise wird aber der H.323-Standard verwendet.

Bezüglich der Telefonanlage wird die genannte Aufgabe gelöst, indem als eine Sonderfunktion die Bereitstellung einer Option für einen Anrufer vorgesehen ist, seine in einer Rufnummernliste des Telefonie-Endgeräts hinterlegte Rufnummer zu bearbeiten. Vorteilhafterweise ist die Telefonanlage dabei zur Durchführung auch der genannten vorteilhaften Ausgestaltungen des Verfahrens ausgelegt.

Die mit der Erfindung erzielten Vorteile bestehen insbesondere darin, dass durch die Bereitstellung einer Option für den Anrufer, seine in der Rufnummernliste des Telefonie-Endgeräts hinterlegte Rufnummer insbesondere nach einem vergeblichen Anrufversuch nachträglich zu bearbeiten, eine besonders bedarfsgerechte Verwaltung der im angerufenen Telefonie-Endgerät hinterlegten Informationen ermöglicht ist. Gerade bei vergleichsweise komplexen Anlagenstrukturen oder auch Anruferstrukturen ist damit eine Selektion und Strukturierung der hinterlegten Daten möglich, die dem Nutzer des angerufenen Telefonie-Endgeräts nach seiner Rückkehr an den Arbeitsplatz eine erleichterte Bearbeitung möglicherweise angefallener Rückrufwünsche ermöglicht. Eine besonders bedarfsgerechte Informationsbearbeitung in der Rufnummernliste des angerufenen Telefonie-Endgeräts ist dabei insbesondere dadurch gewährleistet, dass dem Anrufer selbst ein nachträglicher Zugriff auf die ihn identifizierende Rufnummer eingeräumt wird. Gerade der Anrufer selbst hat nämlich in der Regel aktuelle Informationen bezüglich seines Rückrufwunsches verfügbar, die durch die eingeräumte Zugriffsmöglichkeit dem angerufenen und nicht erreichten Teilnehmer mitgeteilt werden können.

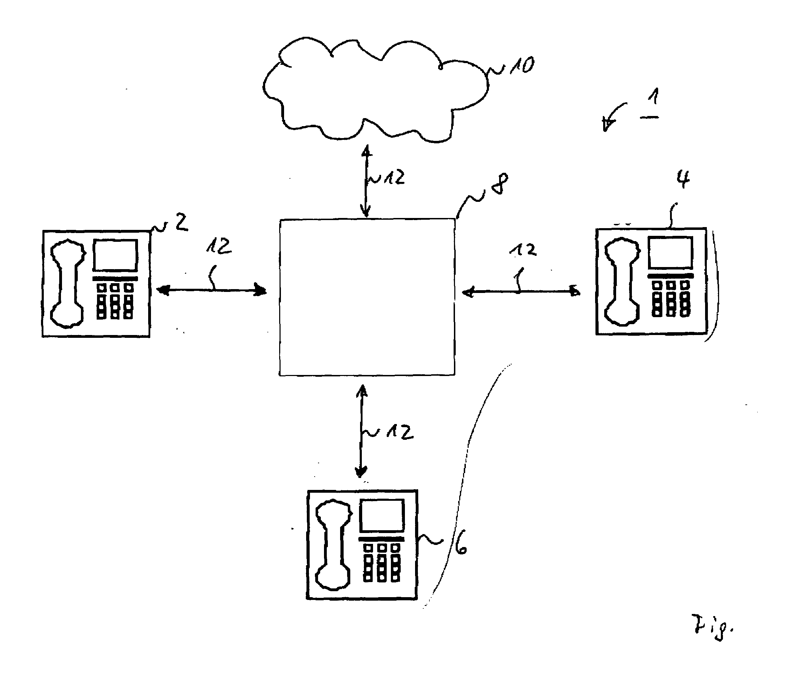

Ein Ausführungsbeispiel der Erfindung wird anhand einer Zeichnung näher erläutert. Darin zeigt die Figur schematisch eine Telefonanlage.

Die Telefonanlage 1 gemäß der Figur umfasst eine Anzahl von Telefonie-Endgeräten 2,4,6, die datenseitig mit einer gemeinsamen, auch als PBX bezeichneten zentralen Vermittlungseinheit 8 verbunden sind. Die zentrale Vermittlungseinheit 8 ist ihrerseits mit einem externen Telefonnetz 10 verbunden. Im Ausführungsbeispiel ist dabei als Übertragungsmedium das Internet-Protokoll vorgesehen, wobei die zentrale Vermittlungseinheit 8 über das Internet geeignet mit dem Telefonnetz 10 verbunden ist.

Wie durch die Doppelpfeile 12 angedeutet, ist die zentrale Vermittlungseinheit 8 sowohl mit dem externen Telefonnetz 10 als auch mit den internen Telefonie-Endgeräten 2,4,6 über geeignete Daten- oder Kommunikationskanäle verbunden. Beim Betrieb der Telefonanlage 1 werden dabei mit den Telefonie-Endgeräten 2,4,6 einerseits Sprach- oder Nutzdaten ausgetauscht, die im Hinblick auf den im Ausführungsbeispiel vorgesehenen Rückgriff auf die Nutzung des Internet-Protokolls in geeigneter komprimierter und digitalisierter Form ausgetauscht werden. Zusätzlich zu den Sprach- oder Nutzdaten werden über die genannten Kommunikationskanäle aber auch Funktionsdaten übertragen, anhand derer Sonderfunktionen der Telefonanlage 1 ausgeführt werden. Als Sonderfunktionen sind dabei im Ausführungsbeispiel in durchaus üblicher Ausgestaltung insbesondere von den einzelnen Nutzern aktivierbare Funktionen, wie beispielsweise Umleitungen, Anrufbeantworterfunktionen, Gebührenverwaltung oder dergleichen vorgesehen.

Darüber hinaus ist als eine weitere Sonderfunktion in der Telefonanlage 1 vorgesehen, dass in den einzelnen Telefonie-Endgeräten 2,4,6 in der Art einer Anruferliste eine Rufnummernliste mit den Rufnummern derjenigen Anrufer angelegt wird, deren Anruf beim jeweiligen Telefonie-Endgerät 2,4 bzw. 6 nicht angenommen werden konnte. Die Rufnummern dieser Anrufer werden, gegebenenfalls unter Hinzufügung ergänzender Informationen, wie Anrufzeit oder dergleichen, in der genannten Rufnummernliste im jeweiligen gerufenen Telefonie-Endgerät 2,4 bzw. 6 abgespeichert und können anschließend vom Nutzer des jeweiligen Telefonie-Endgeräts 2,4 bzw. 6 durch geeignete Kommandofunktionen, wie beispielsweise über Funktionstasten, abgerufen werden.

Darüber hinaus ist die Telefonanlage 1 aber in besonderem Maße dafür ausgelegt, selbst bei vergleichsweise komplexen Telefonnetzen oder auch komplexen Anruferstrukturen eine für die jeweiligen Nutzer besonders bedarfsgerechte und zielführende Weiterverarbeitung der hinterlegten Informationen zu ermöglichen. Um dies zu erreichen, ist die Telefonanlage 1 gezielt dafür ausgelegt, dass ein Anrufer, dessen eingehender Anruf auf einem der Telefonie-Endgeräte 2,4 bzw. 6 nicht entgegengenommen werden konnte und dessen Rufnummer somit in der entsprechenden Rufnummernliste hinterlegt wurde, nachträglich auf diesen Eintrag im jeweiligen gerufenen Telefonie-Endgerät 2,4 bzw. 6 zugreifen und diesen bearbeiten kann. Diese Option wird in der Telefonanlage 1 als weitere Sonderfunktion für sämtliche Anrufer, insbesondere für Anrufer von internen Telefonie-Endgeräten 2,4,6, aber auch - sofern im Hinblick auf die im externen Telefonnetz 10 vorliegenden Mechanismen und Komponenten möglich - vom externen Telefonnetz 10 aus bereitgestellt. Dabei wird beim Betrieb der Telefonanlage 1 einem Anrufer, auf dessen Anrufversuch hin eine Kommunikationsverbindung zum ausgewählten Telefonie-Endgerät 2,4,6 nicht zustande kam, die genannte Option zur Bearbeitung seines Rufnummerneintrags bereitgestellt. Diese Bearbeitung wird in der Telefonanlage 1 vom Telefonie-Endgerät des Anrufers aus veranlasst, so dass der Anrufer entweder unmittelbar nach seinem Anrufversuch oder auch nach einiger Wartezeit die entsprechende Bearbeitung seines Rufnummerneintrags vornehmen kann.

Bei der Bearbeitung des Rufnummerneintrags kann dieser insbesondere mit einer Zusatzinformation versehen werden, in der spezifiziert wird, ob und gegebenenfalls unter welchen Bedingungen, also beispielsweise ab welchem frühestmöglichen Zeitpunkt oder bis zu welchem spätestmöglichen Zeitpunkt, ein Rückruf durch den angerufenen Teilnehmer gewünscht wird. Alternativ kann aber auch vorgesehen sein, dass der Anrufer seinen entsprechenden Rufnummerneintrag im jeweiligen Telefonie-Endgerät 2,4,6 nachträglich löscht, so dass dort keine weitere Information über seinen Anrufversuch hinterlegt ist. Gerade durch diese Löschoption kann auch bei komplexen Telefonsystemen sichergestellt sein, dass der angerufene und kurzzeitig nicht verfügbare Teilnehmer bei seiner Rückkehr an den Arbeitsplatz eine besonders gering gehaltene und bedarfsgerecht ausgerichtete Datenmenge oder Rufnummernliste vorfindet. Dabei kann insbesondere berücksichtigt werden, dass ein Rückrufwunsch zwar zunächst besteht, nachträglich aber wieder wegfällt, beispielsweise wenn der Anrufer eine gewünschte Auskunft von einem anderen als dem ursprünglich angerufenen Sachbearbeiter erhalten hat.

### Bezugszeichenliste

- 1: Telefonanlage
- 2, 4, 8: Telefonie-Endgerät
- 8: Vermittlungseinheit
- 10: Telefonnetz
- 12: Doppelpfeile

## Patentansprüche

1. Verfahren zum Betreiben einer Telefonanlage (1) mit mindestens einem Telefonie-Endgerät, (2, 4, 6) zu dem und/oder von dem zusätzlich zu Sprach- oder Nutzdaten Funktionsdaten übertragen werden, anhand derer Sonderfunktionen der Telefonanlage (1) ausgeführt werden, wobei als eine Sonderfunktion einem Anrufer die Option bereitgestellt wird, seine in einer Rufnummernliste des Telefonie-Endgeräts (2, 4, 6) hinterlegte Rufnummer zu bearbeiten.

2. Verfahren nach Anspruch 1, bei dem als Rufnummernliste die Anruferliste des Telefonie-Endgeräts (2, 4, 6) vorgesehen ist.

3. Verfahren nach Anspruch 1 oder 2, bei dem dem Anrufer die Option bereitgestellt wird, seine in der Rufnummernliste des Telefonie-Endgeräts (2, 4, 6) hinterlegte Rufnummer aus der Rufnummernliste wieder zu löschen.

4. Verfahren nach einem der Ansprüche 1 bis 3, bei dem dem Anrufer die Option zur Bearbeitung bereitgestellt wird, nachdem eine gewünschte Rufverbindung mit dem Telefonie-Endgerät (2, 4, 6) nicht zustande kam.

5. Verfahren nach einem der Ansprüche 1 bis 4, bei dem die Bearbeitung der Rufnummer aus der Anruferliste von einem Telefonie-Endgerät (2, 4, 6) des Anrufers aus veranlasst wird.

6. Verfahren nach einem der Ansprüche 1 bis 5, bei dem Sprach-, Nutz- und/oder Funktionsdaten unter Nutzung des Internet-Protokolls übertragen werden.

7. Telefonanlage (1) mit mindestens einem Telefonie-Endgerät, (2, 4, 6) zu dem und/oder von dem zusätzlich zu Sprach- oder Nutzdaten Funktionsdaten übertragbar sind, anhand derer Sonderfunktionen der Telefonanlage (1) ausgeführt werden, wobei als eine Sonderfunktion die Bereitstellung einer Option für einen Anrufer vorgesehen ist, seine in einer Rufnummernliste des Telefonie-Endgeräts (2, 4, 6) hinterlegte Rufnummer zu bearbeiten.
